# FASCICULE DE BREVET EUROPEEN

(11) **EP 1 682 760 B1**
(45) Date de publication et mention de la délivrance du brevet: **17.01.2007**
(21) Numéro de dépôt: 04791462.7
(22) Date de dépôt: 04.10.2004
(51) Int. Cl.: F02D 41/02, F02D 41/40, F02D 41/12

(54) **SYSTEME D' AIDE A LA REGENERATION DE MOYENS DE DEPOLLUTION INTEGRES DANS UNE LIGNE D'ECHAPPEMENT D'UN MOTEUR DIESEL DE VEHICULE**
SYSTEM ZUR UNTERSTÜTZUNG DER REGENERIERUNG VON IM ABGASSYSTEM EINES FAHRZEUGDIESELMOTORS ANGEORDNETEN ABGASENTGIFTUNGSMITTELN
SUPPORT SYSTEM FOR REGENERATION OF ANTI-POLLUTION MEANS IN THE EXHAUST SYSTEM OF A VEHICLE DIESEL ENGINE

(30) Priorité: 07.11.2003 FR 0313156
(43) Date de publication de la demande: 26.07.2006
(73) Titulaire: Peugeot Citroën Automobiles S.A., 78140 Vélizy Villacoublay (FR)
(72) Inventeur: COLIGNON, Christophe, F-92300 LEVALLOIS PERRET (FR)
(74) Mandataire: Habasque, Etienne J. Jean-François
(86) Numéro de dépôt international: PCT/FR2004/002502
(87) Numéro de publication internationale: WO 2005/049994

(56) Documents cités:
- EP-A- 1 174 612
- EP-A- 1 176 290
- DE-A- 10 007 049

## Description

La présente invention concerne un système d'aide à la régénération de moyens de dépollution associés à des moyens formant catalyseur d'oxydation, et intégrés dans une ligne d'échappement d'un moteur Diesel de véhicule automobile.

Plus particulièrement, l'invention se rapporte à un système dans lequel le moteur est associé à des moyens à rampe commune d'alimentation en carburant de cylindres du moteur, adaptés pour mettre en oeuvre, à iso-couple, une stratégie de régénération par injection de carburant dans les cylindres, selon au moins une post-injection.

Lors de la régénération de moyens de dépollution tels que par exemple un filtre à particules, les phases de lever de pied de l'accélérateur du véhicule (pas d'injection de carburant en fonctionnement normal), et de ralenti du moteur (température d'échappement très faible), sont problématiques car elles font chuter la température d'échappement, c'est-à-dire de la ligne et des éléments intégrés dans celle-ci.

L'utilisation d'une ou de plusieurs post-injections lors de ces phases de vie du moteur permet de limiter la chute de température de la ligne d'échappement, en se basant sur la conversion catalytique des HC produits par la combustion de la ou des post-injections dans le moteur. Un tel système est par exemple, décrit dans le document EP 1 174 612.

Cependant, ces stratégies reposent sur l'exotherme produit par les moyens formant catalyseur, ces moyens, comprenant par exemple un catalyseur d'oxydation ou un piège à NOx avec une fonction d'oxydation CO/HC, étant considérés comme activés.

Lors des phases de retour au ralenti du moteur, consécutivement à un lever de pied de l'accélérateur, il n'y a pas d'injection principale ni d'injection pilote et la ou chaque post-injection ne brûle donc pas dans le cylindre, car elle ne fait que vaporiser le carburant sous forme d'HC qui sont convertis par les moyens formant catalyseur.

La température en entrée des moyens formant catalyseur d'oxydation est donc très faible et malgré l'exotherme catalytique produit par la combustion des HC issus de la ou de chaque post-injection, la face avant des moyens formant catalyseur refroidit progressivement et son activité de conversion se désamorce progressivement.

Lors d'une phase de retour au ralenti prolongée, il se peut que les moyens formant catalyseur ne soient donc pas suffisamment actifs pour convertir tous les HC, ce qui se traduit par des pics d'HC en aval de ces moyens formant catalyseur, voire des fumées bleues et/ou des odeurs à l'échappement.

Par ailleurs, l'utilisation de post-injections engendre une dilution de l'huile de lubrification par le carburant, ce qui dégrade les propriétés de lubrification de celle-ci, et notamment une baisse de la viscosité et peut conduire si cette viscosité est trop basse, à une casse du moteur.

Le but de l'invention est donc de résoudre ces problèmes.

A cet effet, l'invention a pour objet un système d'aide à la régénération de moyens de dépollution associés à des moyens formant catalyseur d'oxydation, et intégrés dans une ligne d'échappement d'un moteur Diesel de véhicule automobile et dans lequel le moteur est associé à des moyens à rampe commune d'alimentation en carburant de cylindres du moteur, adaptés pour mettre en oeuvre, à iso-couple, une stratégie de régénération par injection de carburant dans les cylindres selon au moins une post-injection, caractérisé en ce qu'il comporte :
- des moyens de détection d'une requête de régénération et donc de post-injection ;
- des moyens de détection d'un état de lever de pied de l'accélérateur du véhicule ;
- des moyens d'acquisition de la température en aval des moyens formant catalyseur ;
- des moyens de détermination d'une durée maximale d'application des post-injections durant la phase de retour au ralenti, consécutivement à un lever de pied de l'accélérateur, à partir de cette température ; et
- des moyens de coupure immédiate de la ou de chaque post-injection dès que la durée d'utilisation des post-injections a atteint la durée maximale d'application prédéterminée.

Suivant d'autres caractéristiques :
- les moyens de dépollution comprennent un filtre à particules ;
- les moyens de dépollution comprennent un piège à NOx ;
- le carburant comporte un additif destiné à se déposer avec les particules auxquelles il est mélangé, sur les moyens de dépollution pour faciliter leur régénération ;
- le carburant comporte un additif formant piège à NOx ; et
- le moteur est associé à un turbocompresseur.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure générale d'un système d'aide à la régénération selon l'invention ; et
- la Fig.2 représente un organigramme illustrant le fonctionnement de celui-ci.

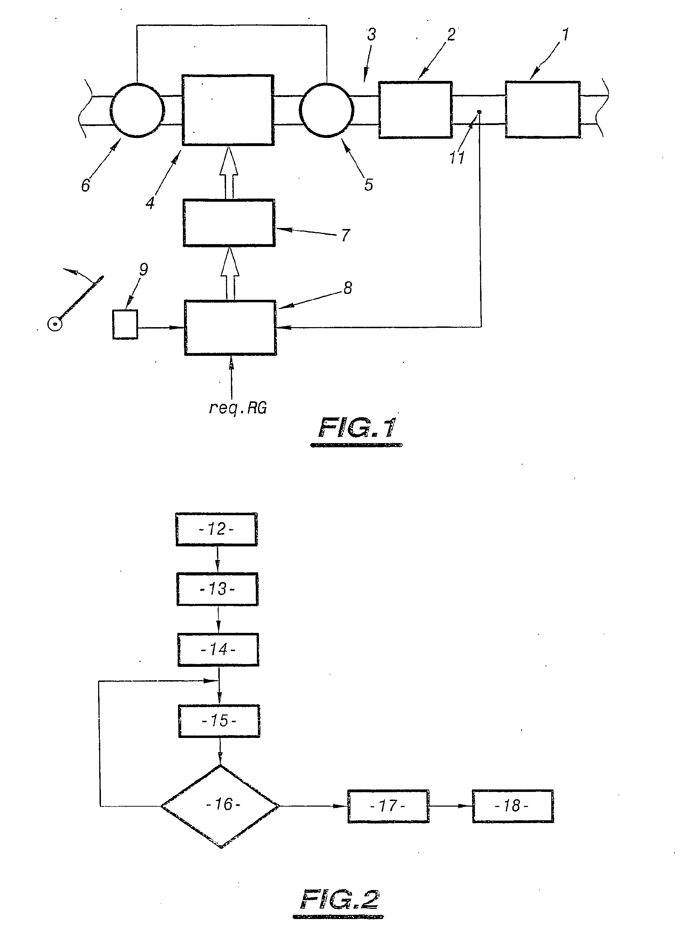

On a en effet illustré sur la figure 1, la structure générale d'un système d'aide à la régénération de moyens de dépollution, désignés par la référence générale 1 sur cette figure, associés à des moyens formant catalyseur d'oxydation désignés par la référence générale 2, et intégrés dans une ligne d'échappement 3, d'un moteur Diesel 4 de véhicule automobile.

Le moteur peut être associé à un turbocompresseur et dans ce cas, la portion de turbine 5 de celui-ci est également associée à cette ligne d'échappement, la portion du compresseur 6 du turbocompresseur étant placée en amont du moteur.

Par ailleurs, ce moteur est également associé à des moyens 7 à rampe commune d'alimentation en carburant des cylindres de ce moteur, adaptés pour mettre en oeuvre, à iso-couple, une stratégie de régénération par injection de carburant dans les cylindres, selon au moins une post-injection, de façon classique.

Ces moyens sont contrôlés par une unité de pilotage, désignée par la référence générale 8, adaptée pour détecter une requête de régénération req.RG, délivrée par exemple par un superviseur des moyens de dépollution, et donc de post-injection et raccordée à des moyens 9 de détection d'un état de lever de pied de l'accélérateur du véhicule.

Ces moyens peuvent présenter n'importe quelle structure appropriée.

Par ailleurs, cette unité de pilotage 8 est également raccordée à des moyens d'acquisition de la température en aval des moyens formant catalyseur 2, ces moyens d'acquisition étant désignés par la référence générale 11.

Ces moyens comprennent tout capteur de température approprié.

Ceci permet alors, suite à la détection d'une requête de régénération et donc de post-injection, à cette unité de pilotage 8, de détecter un état de lever de pied de l'accélérateur du véhicule, comme cela est illustré par l'étape 12 sur la figure 2.

L'unité 8 est alors adaptée pour acquérir la température en aval des moyens formant catalyseur lors de l'étape 13 et pour déterminer une durée maximale d'application des post-injections durant la phase de retour au ralenti, consécutivement à un lever de pied de l'accélérateur, à partir de cette température, lors de l'étape 14.

L'unité 8 surveille alors en 15 et 16, la durée d'utilisation des post-injections, et détecte le moment où cette durée d'utilisation a atteint la durée maximale d'application prédéterminée.

Dès que la durée d'utilisation a atteint la durée maximale d'application prédéterminée lors de la phase de retour au ralenti, consécutivement à un lever de pied de l'accélérateur, comme cela est illustré en 17, l'unité de pilotage 8 est adaptée pour couper immédiatement la ou chaque post-injection, comme cela est illustré par l'étape 18.

On notera également qu'un tel système peut fonctionner avec des moyens de dépollution formés par un filtre à particules, un piège à NOx, et qu'un additif destiné à se déposer avec les particules auxquelles il est mélangé, sur les moyens de dépollution pour faciliter leur régénération peut également être mélangé au carburant, de façon classique, pour abaisser la température de combustion des suies piégées dans celui-ci.

De façon classique, cet additif est en effet présent dans les particules après combustion du carburant additivé dans le moteur.

Un additif formant piège à NOx peut également être envisagé.

On conçoit alors que grâce à une telle structure, on autorise une durée maximale d'application des post-injections pour la phase de lever de pied.

Cette durée maximale se présente sous la forme d'un compteur de temps qui se vide c'est-à-dire décroît/se décrémente au cours de la phase de lever de pied durant la phase de régénération. Ce compteur est réinitialisé à la fin de cette phase.

En fait, ce système permet de limiter les quantités de carburant post-injectées lors de la phase de lever de pied lorsque les niveaux thermiques de la ligne d'échappement sont les plus défavorables.

En limitant de cette façon la quantité totale de carburant post-injecté pendant cette phase, qui n'est pas la plus efficace du point de vue de la régénération des moyens de dépollution, on optimise la proportion de temps de post-injection efficace et on limite la dilution de l'huile de lubrification du moteur par le carburant.

Enfin, ceci permet également de limiter le risque que la fonction d'oxydation ne se désamorce subitement, ce qui se traduirait par un déficit de conversion des HC et donc une bouffée de HC à l'échappement pouvant générer des fumées et/ou des odeurs.

Bien entendu, d'autres modes de réalisation peuvent être envisagés.

Ainsi par exemple, les moyens de dépollution et les moyens formant catalyseur d'oxydation peuvent être intégrés dans un seul et même élément, notamment sur un même substrat.

A titre d'exemple, un filtre à particules intégrant la fonction d'oxydation peut être envisagé.

De même, un piège à NOx intégrant une telle fonction d'oxydation peut également être envisagé, que celui-ci soit additivé ou non.

Cette fonction d'oxydation et/ou de piège à NOx peut être remplie par exemple par un additif mélangé au carburant.

## Revendications

1. Système d'aide à la régénération de moyens de dépollution (1) associés à des moyens formant catalyseur d'oxydation (2), et intégrés dans une ligne d'échappement (3) d'un moteur Diesel (4) de véhicule automobile et dans lequel le moteur (4) est associé à des moyens (7) à rampe commune d'alimentation en carburant de cylindres du moteur, adaptés pour mettre en oeuvre, à iso-couple, une stratégie de régénération par injection de carburant dans les cylindres selon au moins une post-injection, **caractérisé en ce qu'**il comporte :
- des moyens (8) de détection d'une requête de régénération (req.RG) et donc de post-injection ;
- des moyens (9) de détection d'un état de lever de pied de l'accélérateur du véhicule ;
- des moyens (11) d'acquisition de la température en aval des moyens formant catalyseur (2) ;
- des moyens (8) de détermination d'une durée maximale d'application des post-injections durant la phase de retour au ralenti, consécutivement à un lever de pied de l'accélérateur, à partir de cette température ; et
- des moyens (7,8) de coupure immédiate de la ou de chaque post-injection dès que la durée d'utilisation des post-injections a atteint la durée maximale d'application prédéterminée.

2. Système selon la revendication 1, **caractérisé en ce que** les moyens de dépollution (1) comprennent un filtre à particules.

3. Système selon la revendication 1 ou 2, **caractérisé en ce que** les moyens de dépollution (1) comprennent un piège à NOx.

4. Système selon l'une quelconque des revendications précédentes, **caractérisé en ce que** le carburant comporte un additif destiné à se déposer avec les particules auxquelles il est mélangé, sur les moyens de dépollution (1) pour faciliter leur régénération.

5. Système selon l'une quelconque des revendications 1 à 3, **caractérisé en ce que** le carburant comporte un additif formant piège à NOx.

6. Système selon l'une quelconque des revendications précédentes, **caractérisé en ce que** le moteur est associé à un turbocompresseur (5,6).

## Claims

1. Support system for regenerating means of pollution control (1) associated with the means which make up the oxidation catalyst (2), and which is incorporated into the exhaust system (3) of an automotive vehicle Diesel engine (4) and in which the engine (4) is associated with an engine cylinder common rail injection fuel supply (7), suitable for implementing a strategy for regeneration at constant torque through the injection of fuel into the cylinders by at least one post-injection, **characterised by** the fact that it includes
- means (8) for detecting a request for regeneration (req.RG) and therefore for post injection
- means (9) for detecting a state in which the foot is off the vehicle accelerator;
- means (11) of acquisition of the temperature downstream of the means which make up the catalyst (2);
- means (8) of determining, from this temperature, a maximum period of application of post injections during the return to idle once the foot is off the accelerator; and
- means (7, 8) for immediate cut-off of each post-injection or injections as soon as the period of use of the post-injections has reached the predetermined maximum application period.

2. System as described in claim 1, **characterised by** the fact that the means of pollution control (1) include a particle filter.

3. System as described in claim 1 or 2, **characterised by** the fact that the means of pollution control (1) includes a NOx trap.

4. System according to any of the preceding claims whatsoever, **characterised by** the fact that the fuel includes an additive which is intended to be deposited, with the particles with which it is mixed, onto the means of pollution control (1) in order to facilitate its regeneration.

5. System as described in any of claims 1 to 3 whatsoever, **characterised by** the fact that the fuel includes an additive which acts as a NOx trap.

6. System according to any of the preceding claims whatsoever, **characterised by** the fact that the engine is associated with a turbo-charger (5, 6).

## Patentansprüche

1. System zur Unterstützung der Regenerierung von Entgiftungsmitteln (1), die einen Oxidationskatalysator (2) bildenden Mitteln zugeordnet und in eine Auspuffleitung (3) eines Dieselmotors eines Kraftfahrzeugs integriert sind, und bei dem der Motor (4) Mitteln (7) mit gemeinsamem Verteilerrohr zur Kraftstoffversorgung von Zylindern des Motors zugeordnet ist, die ausgelegt sind, um bei gleichmäßigem Drehmoment eine Strategie der Regenerierung durch Kraftstoffeinspritzung in die Zylinder gemäß mindestens einer Nacheinspritzung anzuwenden, **dadurch gekennzeichnet, dass** es aufweist:
- Mittel (8) zur Erfassung einer Anforderung einer Regenerierung (req.RG) und folglich einer Nacheinspritzung;
- Mittel (9) zur Erfassung eines Zustande des Abhebens des Fußes vom Gaspedal des Fahrzeugs;
- Mittel (11) zur Erfassung der Temperatur hinter den einen Katalysator (2) bildenden Mitteln;
- Mittel (8) zur Bestimmung einer maximalen Anwendungsdauer der Nacheinspritzungen während der Phase der Rückkehr in den Leerlauf-nach einem Abheben des Fußes vom Gaspedal, ausgehend von dieser Temperatur; und
- Mittel (7, 8) zur direkten Unterbrechung der oder jeder Nacheinspritzung, sobald die Nutzungsdauer der Nacheinspritzungen die vorbestimmte maximale Anwendungsdauer erreicht hat.

2. System nach Anspruch 1, **dadurch gekennzeichnet, dass** die Entgiftungsmittel (1) ein Partikelfilter enthalten.

3. System nach Anspruch 1 oder 2, **dadurch gekennzeichnet, dass** die Entgiftungsmittel (1) eine NOx-Falle enthalten.

4. System nach einem der vorhergehenden Ansprüche, **dadurch gekennzeichnet, dass** der Kraftstoff ein Additiv enthält, das dazu bestimmt ist, sich mit den Partikeln, denen es beigemischt ist, auf den Entgiftungsmitteln (1) abzusetzen, um ihre Regenerierung zu erleichtern.

5. System nach einem der Ansprüche 1 bis 3, **dadurch gekennzeichnet, dass** der Kraftstoff ein Additiv enthält, das eine NOx-Falle bildet.

6. System nach einem der vorhergehenden Ansprüche, **dadurch gekennzeichnet, dass** der Motor einem Turbokompressor (5, 6) zugeordnet ist.
